# EUROPEAN PATENT APPLICATION

(11) **EP 4 733 948 A1**
(43) Date of publication of application: **29.04.2026**
(21) Application number: 24847910.7
(22) Date of filing: 02.07.2024
(51) Int. Cl.: G06F 12/0871, H04L 49/9015

(54) **DATA STORAGE METHOD AND APPARATUS, DATA READING METHOD AND APPARATUS, AND READABLE MEDIUM**

(30) Priority: 28.07.2023 CN 202310942698
(71) Applicant: Sanechips Technology Co., Ltd., Shenzhen, Guangdong 518055 (CN)
(72) Inventor: GAO, Wenjie, Shenzhen, Guangdong 518055 (CN); XU, Jinlin, Shenzhen, Guangdong 518055 (CN); XU, Dongguo, Shenzhen, Guangdong 518055 (CN); GAN, Xingfeng, Shenzhen, Guangdong 518055 (CN); ZHU, Runming, Shenzhen, Guangdong 518055 (CN); HUANG, Kun, Shenzhen, Guangdong 518055 (CN); WU, Jinjuan, Shenzhen, Guangdong 518055 (CN)
(74) Representative: Canzler & Bergmeier Patentanwälte Partnerschaft mbB
(86) International application number: PCT/CN2024/103084
(87) International publication number: WO 2025/025950

(57) **Abstract**

The present disclosure provides a data storage method, applied to a data processing apparatus. A first linked list used for managing on-chip storage and a second linked list used for managing off-chip storage are configured in the data processing apparatus; the first linked list and the second linked list comprise queue information and node switching information; the queue information of the first linked list comprises a storage mark; and the storage mark is used for representing that a data storage mode is on-chip storage or off-chip storage. The method comprises: determining a first storage mode of data to be stored, and determining a second storage mode of previous data storage on the basis of a storage mark; and when the first storage mode is different from the second storage mode, determining a target node for the previous data storage, updating node switching information of the target node in a linked list corresponding to the target node, and updating the storage mark. The present disclosure further provides a data reading method, a data processing apparatus, and a readable medium.

## Description

### CROSS REFERENCE TO RELATED APPLICATIONS

The present application claims the priority to Chinese Patent Application No. 202310942698.8 filed with the CNIPA on July 28, 2023, the contents of which are incorporated herein by reference in their entirety.

### TECHNICAL FIELD

The present disclosure relates to, but is not limited to, the field of computer technology.

### BACKGROUND

Linked list storage management realizes concatenation of data stored in a Random Access Memory (RAM) with a queue linked list and an idle linked list.

The existing techniques in linked list storage management include: multi-queue linked lists, shared on-chip and off-chip linked lists, and on-chip and off-chip node division.

At present, most schemes for on-chip and off-chip linked list concatenation include the following schemes (1) and (2). In the scheme (1), off-chip cache resources are occupied after an on-chip cache is used up, in which case a single linked list may be used to concatenate on-chip linked list nodes and off-chip linked list nodes, or two sets of linked list nodes with associated addresses may be used. However, a utilization mode of on-chip and off-chip resources is fixed in the scheme (1), resulting in low flexibility. In the scheme (2), an on-chip cache and an off-chip cache maintain a single set of linked list nodes together, data is selectively stored on-chip or off-chip based on on-chip flags or off-chip flags, and on-chip nodes and off-chip nodes are concatenated. However, the scheme (2) has the problem of unbalanced RAM access caused by excessively high address jumping between the on-chip cache and the off-chip cache.

### SUMMARY

The present disclosure provides a data storage method and apparatus, a data reading method and apparatus, and a readable medium.

In a first aspect, an embodiment of the present disclosure provides a data storage method applied to a data processing apparatus, the data processing apparatus being configured with a first linked list for management of on-chip storage and a second linked list for management of off-chip storage, each of the first linked list and the second linked list including queue information and node switching information, the queue information of the first linked list including a storage flag for indicating a storage mode of data, and the storage mode including on-chip storage and off-chip storage; the method including: determining a first storage mode of data to be stored, and storing the data to be stored in the first storage mode; determining a second storage mode of previous data storage based on the storage flag; and in a case where the first storage mode is different from the second storage mode, determining a target node where the previous data storage is performed, updating node switching information of the target node in a linked list corresponding to the target node, and updating the storage flag; and the linked list corresponding to the target node being one of the first linked list and the second linked list.

In another aspect, an embodiment of the present disclosure further provides a data reading method applied to a data processing apparatus, the data processing apparatus being configured with a first linked list for management of on-chip storage and a second linked list for management of off-chip storage, each of the first linked list and the second linked list including queue information and node switching information, the queue information of the first linked list including a read flag for indicating a reading mode of data, and the reading mode including on-chip reading and off-chip reading; the method including: determining a reading mode of data to be read based on the read flag; in a case where the reading mode is off-chip reading, determining a target node based on the queue information of the second linked list; acquiring the node switching information of the target node from the second linked list; and reading the data to be read from the target node, wherein the read flag is updated to a value indicating on-chip reading after determining, based on the node switching information, that all data stored in an off-chip cache is read.

In still another aspect, an embodiment of the present disclosure further provides a data processing apparatus, including: one or more processors; a storage device having one or more programs stored therein, and when the one or more programs are executed by the one or more processors, the one or more processors being caused to implement any of the data storage methods described herein; and one or more input/output (I/O) interfaces, which are connected between the one or more processors and the storage device, and are configured to enable information interaction between the one or more processors and the storage device.

In yet another aspect, an embodiment of the present disclosure further provides a data processing apparatus, including: one or more processors; a storage device having one or more programs stored therein, and when the one or more programs are executed by the one or more processors, the one or more processors being caused to implement any of the data reading methods described herein; and one or more input/output (I/O) interfaces, which are connected between the one or more processors and the storage device, and are configured to enable information interaction between the one or more processors and the storage device.

In yet another aspect, an embodiment of the present disclosure further provides a computer readable medium having stored therein a computer program which, when executed by a processor, causes the processor to implement any of the data storage methods described herein or any of the data reading methods described herein.

### BRIEF DESCRIPTION OF DRAWINGS

FIG. 1 is a schematic diagram illustrating a principle of data storage and data reading according to an embodiment of the present disclosure;
FIG. 2 is a flowchart illustrating a data storage method according to an embodiment of the present disclosure;
FIG. 3 is a flowchart illustrating a data storage method according to an embodiment of the present disclosure;
FIG. 4 is a flowchart illustrating a data reading method according to an embodiment of the present disclosure; and
FIG. 5 is a flowchart illustrating a data reading method according to an embodiment of the present disclosure.

### DETAIL DESCRIPTION OF EMBODIMENTS

Exemplary embodiments will be described more fully below with reference to the drawings, but the exemplary embodiments may be embodied in different forms and should not be interpreted as being limited to the embodiments described herein. Rather, the embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the terms "include" and/or "be made of" used herein indicate the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly use d dictionaries, should be interpreted as having a meaning that is consistent with a meaning in the related technology and the background of the present disclosure, and should not be interpreted in an idealized or overly formal sense unless expressly so defined herein.

An on-chip cache may adopt a single linked list structure or a multi-linked list structure for meeting line rate requirements of system design. The multi-linked list structure is formed by a plurality of sub-linked lists that are concatenated to form a queue linked list. Off-chip nodes realize queue linked list management by node aggregation, and by node aggregation, data blocks with consecutive addresses may be combined into a chunk which is generally referred to as a chunk_block structure. When an on-chip linked list and an off-chip linked list share the chunk_block structure, if on-chip data and off-chip data are mixed, some of linked list nodes are used on-chip while other linked list nodes are used off-chip, which causes poor balance of read-write side access of an off-chip cache. That is, when the on-chip cache and the off-chip cache share a single linked list, the linked list nodes are randomly allocated, and addresses of the on-chip cache and those of the off-chip cache are randomly used, which may cause that part of the addresses are occupied by the on-chip cache, channel addresses of the off-chip cache are unevenly used, and performance of the off-chip cache is reduced.

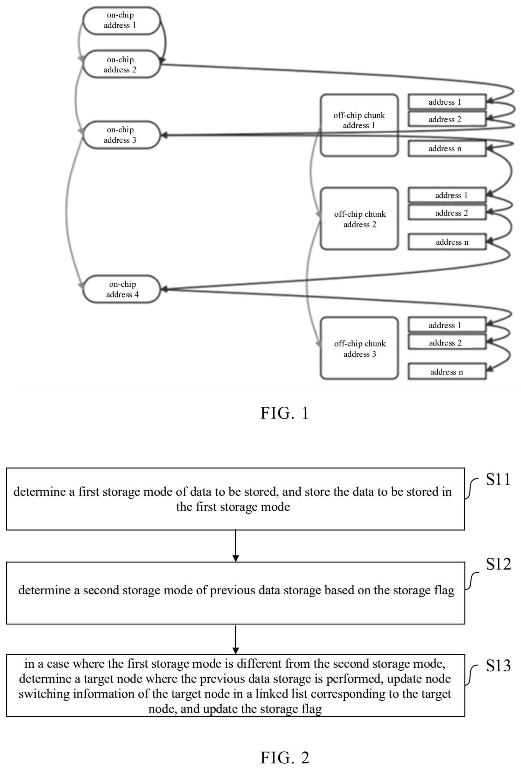

In order to at least solve the above problems, an embodiment of the present disclosure provides a data storage method, which is applied to a data processing apparatus configured with a first linked list for management of on-chip storage and a second linked list for management of off-chip storage. As shown in FIG. 1, the arrows which connect an on-chip address 1, an on-chip address 2, an on-chip address 3, and an on-chip address 4 represent the first linked list, the arrows which connect an off-chip chunk address 1, an off-chip chunk address 2, and an off-chip chunk address 3 represent the second linked list, and the other arrows represent actual linked lists formed in data access processes. As can be seen from FIG. 1, on-chip and off-chip data access can be realized.

Each of the first linked list and the second linked list may include queue information and node switching information, the queue information of the first linked list may include a storage flag (tp_flag) and a read flag (hp_flag), the storage flag (tp_flag) is configured to indicate a storage mode of data, and the storage mode includes on-chip storage and off-chip storage; and the read flag (hp_flag) is configured to indicate a reading mode of data, and the reading mode includes on-chip reading and off-chip reading.

The queue information of the first linked list is defined as shown in Table 1:

**Table 1**

| | |
|---|---|
| imem_hp | a head pointer of the first linked list |
| imem_tp | a tail pointer of the first linked list |
| hp_change_vld | a first node switch flag of the first linked list for indicating whether a first node is to be subjected to storage mode switching |
| tp_up_ptr | a penultimate pointer of the first linked list, which is updated when on-chip storage is not empty and configured to query and update an on-chip next node switch flag |
| hp_flag | a read flag, which is 0 for indicating on-chip reading and 1 for indicating off-chip reading |
| tp_flag | a storage flag, which is 0 for indicating on-chip storage and 1 for indicating off-chip storage |

The node switching information of each node in the first linked list is defined as shown in Table 2:

**Table 2**

| | |
|---|---|
| imem_next_change_flag | a second switch flag for indicating a next hop from a current first linked list node is switched to off-chip storage |

The queue information of the second linked list is defined as shown in Table 3:

**Table 3**

| | |
|---|---|
| chunk_hp | an off-chip node head pointer |
| chunk_tp | an off-chip node tail pointer |
| chunk_cti | a block enqueue count, a block storage offset |
| chunk_cto | a block dequeue count, a block read offset |

The node switching information of each node in the second linked list is defined as shown in Table 4:

**Table 4**

| | |
|---|---|
| chunk_chang_vld | a first switch flag for indicating whether to switch to on-chip storage |
| chunk_change_cti | a switch position offset for indicating which block is switched |

It should be noted that Table 1 and Table 3 are for data storage queues, each (one) on-chip storage queue corresponds to one Table 1, and each (one) off-chip storage queue corresponds to one Table 3; and Table 2 and Table 4 are for data storage nodes, each (one) on-chip storage node corresponds to one Table 2, and each (one) off-chip data storage node (i.e., each (one) chunk node) corresponds to one Table 4.

Based on the above definitions of the first and second linked lists, the present disclosure provides the data storage method, which may include the following operations S11 to S13, as shown in FIG. 2.

At operation S11, a first storage mode of data to be stored is determined, and the data to be stored is stored in the first storage mode.

At this operation, it is determined whether the data to be stored needs to be stored in an on-chip cache or an off-chip cache. An implementation method for determining the first storage mode of the data to be stored is not limited in the embodiments of the present disclosure. Illustratively, the storage mode may be determined based on a user-defined strategy or may be a specified storage mode.

At operation S12, a second storage mode of previous data storage is determined based on the storage flag.

tp_flag in the queue information of the first linked list is read, and the second storage mode of the previous data storage is determined based on a value of tp_flag. Illustratively, if tp_flag=0, it is indicated that the previous data storage adopts on-chip storage, that is, the second storage mode is on-chip storage; if tp_flag=1, it is indicated that the previous data storage adopts off-chip storage, that is, the second storage mode is off-chip storage.

At operation S13, in a case where the first storage mode is different from the second storage mode, a target node where the previous data storage is performed is determined, node switching information of the target node is updated in a linked list corresponding to the target node, and the storage flag is updated.

If the first storage mode is different from the second storage mode, switching between on-chip storage and off-chip storage needs to be performed. In this case, the target node is determined, and the node switching information of the target node is updated, with the node switching information configured to indicate whether the node is subjected to storage mode switching and indicate a position for the switching. The target node is a node for storing previous data when the previous data storage is performed, and if the previous data storage adopts on-chip storage, the target node is an on-chip cache node, and the linked list corresponding to the target node is the first linked list; if the previous data storage adopts off-chip storage, the target node is an off-chip cache node, i.e., a chunk node, and the linked list corresponding to the target node is the second linked list.

It should be noted that tp_flag also needs to be updated in a case where the first storage mode is different from the second storage mode. Illustratively, if the first storage mode is on-chip storage and the second storage mode is off-chip storage, the value of tp_flag is updated from 0 to 1; if the first storage mode is off-chip storage and the second storage mode is on-chip storage, the value of tp_flag is updated from 1 to 0.

The data storage method provided in the embodiment of the present disclosure is applied to the data processing apparatus configured with the first linked list for management of on-chip storage and the second linked list for management of off-chip storage, each of the first linked list and the second linked list includes the queue information and the node switching information, and the queue information of the first linked list includes the storage flag configured to indicate whether the storage mode of the data is on-chip storage or off-chip storage. The method includes: determining the first storage mode of the data to be stored, and determining the second storage mode of the previous data storage based on the storage flag; in a case where the first storage mode is different from the second storage mode, determining the target node where the previous data storage is performed, updating the node switching information of the target node in the linked list corresponding to the target node, and updating the storage flag. According to the embodiment of the present disclosure, each of the on-chip cache and the off-chip cache maintains respective one linked list, the node switching information is recorded in the two linked lists, and the storage flag is maintained in the linked list of the on-chip cache, the switching between on-chip storage and off-chip storage can be realized with the storage flag and the node switching information during data storage, on-chip storage resources and off-chip storage resources can be used flexibly, and the problem of unbalanced usage of cache addresses can be solved effectively.

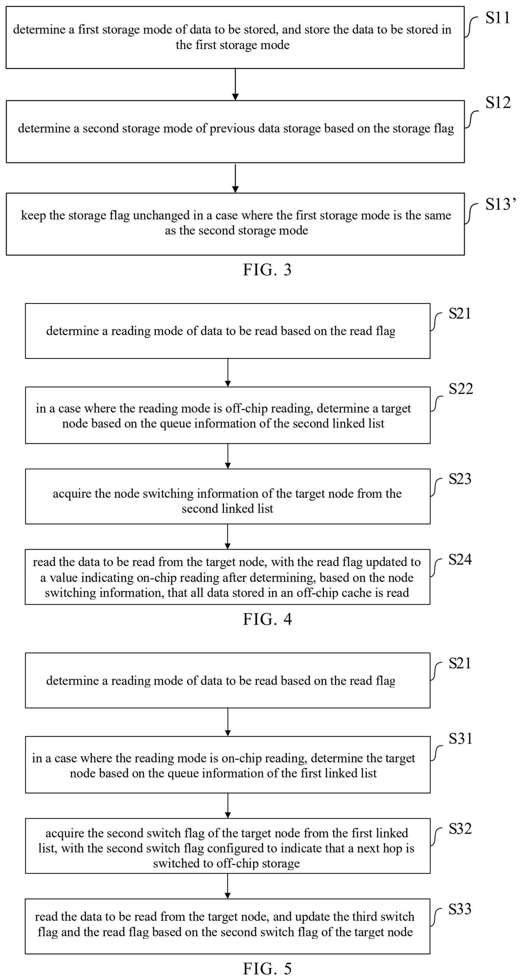

FIG. 3 is a second flowchart illustrating a data storage method according to an embodiment of the present disclosure. In some embodiments, as shown in FIG. 3, after determining the second storage mode of the previous data storage based on the storage flag (i.e., operation S12), the data storage method may further include: operation S13', keeping the storage flag unchanged in a case where the first storage mode is the same as the second storage mode.

If the first storage mode is the same as the second storage mode, it is indicated that the storage mode switching is not needed, so that the value of tp_flag does not need to be updated, that is, the value of tp_flag remains unchanged.

It should be noted that operation S11 and operation S12 in the present embodiment are the same as those in the embodiment illustrated by FIG. 2, and thus will not be described here.

If the first storage mode is different from the second storage mode, it is indicated that the storage mode switching needs to be performed, and the storage mode switching is performed in the following two ways: one is to switch from off-chip storage to on-chip storage, and the other is to switch from on-chip storage to off-chip storage, which will be respectively described below.

In some embodiments, the second storage mode is off-chip storage, and the linked list corresponding to the target node is the second linked list, that is, switching from off-chip storage to on-chip storage is to be performed. As shown in Table 4, the node switching information in the second linked list includes chunk_change_vld and chunk_change_cti. Correspondingly, updating the node switching information of the target node in the linked list corresponding to the target node (i.e., operation S13) includes: updating the first switch flag (chunk_change_vld) and the switch position offset (chunk_change_cti) of the target node in the second linked list, with the first switch flag configured to indicate whether to switch to on-chip storage, and the switch position offset configured to indicate an address of a data block for the storage mode switching.

In some embodiments, updating the first switch flag (chunk_change_vld) and the switch position offset (chunk_change_cti) of the target node in the second linked list includes: updating the first switch flag (chunk_change_vld) to a value indicating that the storage mode is switched to on-chip storage, and updating the switch position offset to a data block offset address for the switching to on-chip storage. Illustratively, chunk_change_vld=1, and chunk_change_cti is updated to an address of a data block of a chunk node, with the data block used for the switching to on-chip storage. Taking the second linked list shown in FIG. 1 as an example, if the target node is the off-chip chunk address 2, that is, the storage mode switching is performed in the last block of the chunk node at the off-chip chunk address 2, then chunk_change_cti=a block address n of the chunk address 2.

In some embodiments, as shown in Table 1, the queue information of the first linked list may further include the first node switch flag (hp_change_vld) for indicating whether the first node is subjected to storage mode switching. Illustratively, if hp_change_vld=0, it is indicated that the first node is not subjected to storage mode switching; if hp_change_vld=1, it is indicated that the first node is subjected to storage mode switching.

In a case where the first storage mode is the same as the second storage mode, the storage mode switching is not performed when the data to be stored is stored, and the data storage method may further include: if the data to be stored is first data stored in an on-chip storage queue, updating the first node switch flag (hp_change_vld). That is, if merely the data to be stored is stored in the on-chip cache, that is, the data to be stored is on-chip stored first data, a first node in an on-chip linked list queue is not subjected to switching. In some embodiments, the first node switch flag (hp_change_vld) may be updated to a value indicating that a first node in a queue of the first linked list is not switched to off-chip storage, for example, hp_change_vld=0.

In some embodiments, the second storage mode is on-chip storage, and the linked list corresponding to the target node is the first linked list, that is, switching from on-chip storage to off-chip storage is to be performed. Correspondingly, updating the node switching information of the target node in the linked list corresponding to the target node (i.e., operation S13) includes: updating the second switch flag (imem_next_change_flag) of the target node in the first linked list or updating the third switch flag (hp_change_vld) in the queue information in the first linked list, with the second switch flag configured to indicate that a next hop is switched to off-chip storage, and the third switch flag configured to indicate whether the first node of the first linked list is switched to off-chip storage. The second switch flag (imem_next_change_flag) is stored in Table 2 of the first linked list, and the third switch flag (hp_change_vld) is stored in Table 1 of the first linked list.

In some embodiments, updating the second switch flag (imem_next_change_flag) of the target node in the first linked list or the third switch flag (hp_change_vld) in the queue information in the first linked list includes: in a case where one piece of data is stored in an on-chip storage queue, updating the third switch flag (hp_change_vld) in the queue information in the first linked list, that is, updating the third switch flag to a value indicating that the storage mode is switched to off-chip storage, for example, hp_change _vld=1; in a case where a plurality of pieces of data are stored in the on-chip storage queue, updating the second switch flag (imem_next_change_flag) of the target node in the first linked list, that is, updating the second switch flag to a value indicating that the storage mode is switched to off-chip storage at a next hop, for example, imem_next_change_flag=1.

In some embodiments, as shown in Table 3, the queue information of the second linked list includes the block storage offset (chunk_cti), and in a case where the first storage mode is off-chip storage and the first storage mode is the same as the second storage mode, the data storage method may further include: updating the block storage offset.

As shown in Table 3, the queue information of the second linked list may further include the off-chip node head pointer (chunk_hp) and the off-chip node tail pointer (chunk_tp), and in a case where the first storage mode is off-chip storage and the first storage mode is the same as the second storage mode, pointer information of an off-chip node needs to be updated. Illustratively, if the data to be stored is first data stored in an off-chip storage queue, the off-chip node head pointer (chunk_hp) and the off-chip node tail pointer (chunk_tp) are updated; if the data to be stored is not the first data stored in off-chip storage queue, that is, other data is already stored in the off-chip storage queue, the off-chip node tail pointer (chunk_tp) is updated.

An embodiment of the present disclosure further provides a data reading method, which is applied to a data processing apparatus configured with a first linked list for management of on-chip storage and a second linked list for management of off-chip storage, each of the first linked list and the second linked list includes queue information and node switching information, the queue information of the first linked list includes a read flag, which is configured to indicate a reading mode of data, and the reading mode includes on-chip reading and off-chip reading. It should be noted that the data processing apparatus and the aforesaid data processing apparatus may be the same data processing apparatus, that is, the data processing apparatus may have both a data storage function and a data reading function. As shown in FIG. 4, the data reading method may include the following operations S21 to S24.

At operation S21, a reading mode of data to be read is determined based on the read flag.

hp_flag in the queue information of the first linked list is read, and the reading mode of the data to be read is determined based on a value of hp_flag. The reading mode of the data to be read depends on a storage mode of the data, and if the storage mode of the data is on-chip storage, the reading mode of the data to be read is on-chip reading correspondingly; if the storage mode of the data is off-chip storage, the reading mode of the data to be read is off-chip reading. Illustratively, if hp_flag=0, the reading mode of the data to be read is on-chip reading; if hp_flag=1, the reading mode of the data to be read is off-chip reading.

At operation S22, in a case where the reading mode is off-chip reading, a target node is determined based on the queue information of the second linked list.

The target node refers to a node for storing the data to be read.

At operation S23, the node switching information of the target node is acquired from the second linked list.

After the target node is determined, the corresponding node switching information may be acquired from Table 4 corresponding to the target node.

At operation S24, the data to be read is read from the target node, with the read flag updated to a value indicating on-chip reading after determining, based on the node switching information, that all data stored in an off-chip cache is read.

The data reading method provided in the embodiment of the present disclosure is applied to the data processing apparatus configured with the first linked list for management of on-chip storage and the second linked list for management of off-chip storage, each of the first linked list and the second linked list includes the queue information and the node switching information, the queue information of the first linked list includes the read flag configured to indicate the reading mode of the data, and the reading mode includes on-chip reading and off-chip reading. The method includes: determining the reading mode of the data to be read based on the read flag; in a case where the reading mode is off-chip reading, determining the target node based on the queue information of the second linked list; acquiring the node switching information of the target node from the second linked list; and reading the data to be read from the target node, with the read flag updated to the value indicating on-chip reading after determining, based on the node switching information, that all the data stored in the off-chip cache is read. According to the embodiment of the present disclosure, each of an on-chip cache and the off-chip cache maintains respective one linked list, the node switching information is recorded in the two linked lists, and the read flag is maintained in the linked list of the on-chip cache, switching between on-chip reading and off-chip reading can be realized with the read flag and the node switching information during data reading, on-chip storage resources and off-chip storage resources can be used flexibly, and the problem of unbalanced usage of cache addresses can be solved effectively.

In some embodiments, as shown in Table 3, the queue information of the second linked list includes the off-chip node head pointer (chunk_hp) and the block read offset (chunk_cto), and determining the target node based on the queue information of the second linked list (i.e., operation S22) includes: determining the target node based on the sum of the off-chip node head pointer and the block read offset. That is, the off-chip node head pointer (chunk_hp) is moved backward by the block read offset (chunk_cto) to a position which is the position of the target node.

In some embodiments, as shown in Table 3, the queue information of the second linked list includes the block read offset (chunk_cto), and as shown in Table 4, the node switching information includes the first switch flag (chunk_change_vld) and the switch position offset (chunk_change_cti), and the first switch flag is configured to indicate whether to switch to on-chip storage.

Determining, based on the node switching information, that all the data stored in the off-chip cache is read (i.e., operation S24) includes: in a case where the first switch flag (chunk_change_vld) indicates switching to on-chip storage and the block read offset (chunk_cto) is equal to the switch position offset (chunk_change_cti), determining that all the data stored in the off-chip cache is read. Illustratively, when chunk_change_vld=1 and chunk _cto=chunk_change_cti, it is determined that all the data stored in the off-chip cache is read, and at this time, the value of hp_flag is updated to 0.

In some embodiments, as shown in Table 1, the queue information of the first linked list includes the third switch flag (hp_change_vld) for indicating whether the first node of the first linked list is switched to off-chip storage. Illustratively, if hp_change_vld=0, it is indicated that the first node of the first linked list is not switched to off-chip storage; if hp_change_vld=1, it is indicated that the first node of the first linked list is switched to off-chip storage.

As shown in FIG. 5, after determining the reading mode of the data to be read based on the read flag (i.e., operation S21), the data reading method may further include the following operations S31 to S33.

At operation S31, in a case where the reading mode is on-chip reading, the target node is determined based on the queue information of the first linked list.

At this operation, the target node may be determined based on the head pointer (imem_hp) of the first linked list and the tail pointer (imem_tp) of the first linked list in the queue information of the first linked list.

At operation S32, the second switch flag of the target node is acquired from the first linked list, with the second switch flag configured to indicate that a next hop is switched to off-chip storage.

At operation S33, the data to be read is read from the target node, and the third switch flag and the read flag are updated based on the second switch flag of the target node.

In a case where the second switch flag (imem_next_change_flag) of the target node indicates that the next hop is switched to off-chip storage, the third switch flag (hp_change_vld) is updated to a value indicating that the first node of the first linked list is switched to off-chip storage, and the read flag (hp_flag) is updated to a value indicating on-chip reading. Illustratively, if imem_next_change_flag=1, the value of hp_change_vld is updated to 1, and the value of hp_flag is updated to 0. It should be noted that in a case where the second switch flag (imem_next_change_flag) of the target node indicates that the next hop is not switched to off-chip storage, the third switch flag (hp_change_vld) and the read flag (hp_flag) are not updated.

Due to limited resources of the on-chip cache, the off-chip cache is used based on usage requirements; when the on-chip cache and the off-chip cache are used simultaneously, the off-chip cache may be divided into a plurality of nodes (chunk nodes) each including a plurality of cache units, and the chunk_block structure can effectively save RAM resources and off-chip RAM access delay compared with a conventional single-linked list structure. Therefore, according to the embodiments of the present disclosure, on-chip cache nodes and off-chip cache nodes are separately managed, which takes a case where a single linked list is used on-chip and node aggregation is adopted off-chip as an example (each of the on-chip linked list and the off-chip linked list may be a single linked list, a multi-linked list, or a chunk_block linked list combination).

The off-chip linked list adopts the chunk_block structure, one chunk node includes n blocks, and for a same queue, a new chunk address cannot be applied for until all the blocks in each chunk node are used up.

Each chunk node uses the flag chunk_change_vld to indicate whether to switch to on-chip storage, and also records the switch position offset chunk_change_cti to indicate which block is switched; when the off-chip block dequeue count chunk_cto is equal to chunk_change_cti, off-chip data reading is completed, and is switched to on-chip data reading. For the off-chip linked list, in order to save resources, one chunk node includes at least 16 data blocks, so that after switching from off-chip reading to on-chip reading and then switching from on-chip reading to off-chip reading, switching cannot be performed in at least 16 data blocks, and each chunk node is merely desired to record one chunk_change_vld and one chunk_change_cti.

A queue of the on-chip linked list is desired to maintain the first node switch flag hp_change_vld, and each node of the on-chip linked list is desired to maintain the next hop switch flag imem_next_change_flag. Since whether the two flags need to be updated may be determined after a next data packet arrives to determine whether a switch is required or not, the two flags may be set to 0 during data storage, and if either of the two flags needs to be updated after the next data packet arrives and a switch is required for the data packet, the flag may be updated to 1, which can avoid maintaining information of a previous linked list during continuous enqueuing of the on-chip linked list.

An embodiment of the present disclosure further provides a data processing apparatus, including: one or more processors; a storage device 102 having stored therein one or more programs which, when executed by the one or more processors, cause the one or more processors to implement the above data storage method and/or the above data reading method; and one or more Input/output (I/O) interfaces connected between the one or more processors and the storage device and configured to enable information interaction between the one or more processors and the storage device.

The processor is a device having a data processing capability, and includes, but is not limited to, a Central Processing Unit (CPU); the storage device is a device having a data storage capability, and includes, but is not limited to, an RAM (more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) is connected between the processor and the storage device, is capable of enabling the information interaction between the processor and the storage device, and includes, but is not limited to, a data bus (Bus).

An embodiment of the present disclosure further provides a computer readable medium having stored therein a computer program which, when executed by a processor, causes the processor to implement the data storage method or the data reading method provided in each of the above embodiments.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. A data storage method applied to a data processing apparatus, the data processing apparatus being configured with a first linked list for management of on-chip storage and a second linked list for management of off-chip storage, each of the first linked list and the second linked list comprising queue information and node switching information, the queue information of the first linked list comprising a storage flag for indicating a storage mode of data, and the storage mode comprising on-chip storage and off-chip storage; the method comprising:
determining a first storage mode of data to be stored, and storing the data to be stored in the first storage mode;
determining a second storage mode of previous data storage based on the storage flag; and
in a case where the first storage mode is different from the second storage mode, determining a target node where the previous data storage is performed, updating node switching information of the target node in a linked list corresponding to the target node, and updating the storage flag; and the linked list corresponding to the target node being one of the first linked list and the second linked list.

2. The method of claim 1, wherein after determining the second storage mode of the previous data storage based on the storage flag, the method further comprises:
keeping the storage flag unchanged in a case where the first storage mode is the same as the second storage mode.

3. The method of claim 2, wherein the second storage mode is off-chip storage, and the linked list corresponding to the target node is the second linked list; and the node switching information of the second linked list comprises a first switch flag and a switch position offset, the first switch flag is configured to indicate whether to switch to on-chip storage, and the switch position offset is configured to indicate an offset address of a data block where storage mode switching is performed.

4. The method of claim 3, wherein the queue information of the first linked list further comprises a first node switch flag, and in a case where the first storage mode is the same as the second storage mode, the method further comprises: updating the first node switch flag in response to the data to be stored being first data stored in an on-chip storage queue.

5. The method of claim 2, wherein the second storage mode is on-chip storage, and the linked list corresponding to the target node is the first linked list; and
updating the node switching information of the target node in the linked list corresponding to the target node comprises: updating a second switch flag of the target node in the first linked list, or updating a third switch flag in the queue information of the first linked list; wherein the second switch flag is configured to indicate that a next hop is switched to off-chip storage, and the third switch flag is configured to indicate whether a first node of the first linked list is switched to off-chip storage.

6. The method of claim 2, wherein the queue information of the second linked list comprises a block storage offset, and in a case where the first storage mode is off-chip storage and the first storage mode is the same as the second storage mode, the method further comprises: updating the block storage offset.

7. A data reading method applied to a data processing apparatus, the data processing apparatus being configured with a first linked list for management of on-chip storage and a second linked list for management of off-chip storage, each of the first linked list and the second linked list comprising queue information and node switching information, the queue information of the first linked list comprising a read flag for indicating a reading mode of data, and the reading mode comprising on-chip reading and off-chip reading; the method comprising:
determining a reading mode of data to be read based on the read flag;
in a case where the reading mode is off-chip reading, determining a target node based on the queue information of the second linked list;
acquiring the node switching information of the target node from the second linked list; and
reading the data to be read from the target node, wherein the read flag is updated to a value indicating on-chip reading after determining, based on the node switching information, that all data stored in an off-chip cache is read.

8. The method of claim 7, wherein the queue information of the second linked list comprises an off-chip node head pointer and a block read offset, and determining the target node based on the queue information of the second linked list comprises:
determining the target node based on a sum of the off-chip node head pointer and the block read offset.

9. The method of claim 7, wherein the queue information of the second linked list comprises a block read offset, the node switch information comprises a first switch flag and a switch position offset, and the first switch flag is configured to indicate whether to switch to on-chip storage; and determining, based on the node switching information, that all the data stored in the off-chip cache is read comprises:
in a case where the first switch flag indicates switching to on-chip storage and the block read offset is equal to the switch position offset, determining that all the data stored in the off-chip cache is read.

10. The method of claim 7, wherein the queue information of the first linked list comprises a third switch flag for indicating whether a first node of the first linked list is switched to off-chip storage; after determining the reading mode of the data to be read based on the read flag, the method further comprises:
in a case where the reading mode is on-chip reading, determining the target node based on the queue information of the first linked list;
acquiring a second switch flag of the target node from the first linked list, the second switch flag being configured to indicate that a next hop is switched to off-chip storage; and
reading the data to be read from the target node, and updating the third switch flag and the read flag based on the second switch flag of the target node.

11. A data processing apparatus, comprising:
one or more processors;
a storage device having one or more programs stored therein;
when the one or more programs are executed by the one or more processors, the one or more processors being caused to implement the data storage method of any one of claims 1 to 6 or the data reading method of any one of claims 7 to 10; and
one or more input/output (I/O) interfaces, which are connected between the one or more processors and the storage device, and are configured to enable information interaction between the one or more processors and the storage device.

12. A computer readable medium having stored therein a computer program which, when executed by a processor, causes the processor to implement the data storage method of any one of claims 1 to 6 or the data reading method of any one of claims 7 to 10.
